# EUROPÄISCHE PATENTANMELDUNG

(11) **EP 4 047 197 A1**
(43) Veröffentlichungstag der Anmeldung: **24.08.2022**
(21) Anmeldenummer: 21157967.7
(22) Anmeldetag: 18.02.2021
(51) Int. Cl.: F02B 37/18, F16F 1/32

(54) **WASTEGATE-ANORDNUNG FÜR EINEN ABGASTURBOLADER**

(71) Anmelder: BMTS Technology GmbH & Co. KG, 70376 Stuttgart (DE)
(72) Erfinder: TRIES, Timo, 71287 Weissach (DE); HASLINGER, Fabian, 68199 Mannheim (DE); TIETSCH, Volker, 71287 Weissach (DE); STARKE, Franz, 70806 Kornwestheim (DE); RODECK, Niklas, 70378 Stuttgart (DE); JOHN, Carsten, 71634 Ludwigsburg (DE)
(74) Vertreter: Herrmann, Jochen

(57) **Zusammenfassung**

Die Erfindung betrifft eine Wastegate-Anordnung für einen Abgasturbolader mit einem Turbinengehäuse (10), das eine Lageraufnahme (19) aufweist, wobei die Lageraufnahme (19) eine Lagerbuchse (50) aufnimmt, die eine Bohrung (51) aufweist, wobei die Bohrung (51) eine Welle (31) aufnimmt, die ein erstes Wellenende (31.1) aufweist, welches im Turbinengehäuse (10) angeordnet ist und die ein zweites Wellenende (31.2) aufweist, das außerhalb des Turbinengehäuses (10) gehalten ist, wobei die Welle (31) an ihrem ersten Wellenende (31.1) an eine Wastegateklappe (37) angekoppelt ist, die im Turbinengehäuse (10) angeordnet ist, um in einer Schließposition eine Wastegate-Passage (15) zu verschließen und in einer Öffnungsposition eine Wastegate-Passage (15) freizugeben, wobei die Welle (31) an ihrem zweiten Wellenende (31.2) einen Betätigungshebel (24) außerhalb des Turbinengehäuses (10) trägt, wobei die Lagerbuchse (50) ein zweites Lagerbuchsen-Ende (53) aufweist, welches im Bereich der Außenseite des Turbinengehäuses (10) dem Betätigungshebel (24) gegenübersteht, wobei ein Federelement (40) verwendet ist, das sich mittelbar oder unmittelbar mit einem zweiten Federende (40.2) auf einer Stützfläche (24.2) des Betätigungshebels (24) abstützt, und wobei die Stützfläche (24.2) zumindest bereichsweise um die Welle (31) herum angeordnet ist. Um bei einer solchen Wastegate Anordnung eine verbesserte Betriebssicherheit zu erreichen ist es erfindungsgemäß vorgesehen dass das Turbinengehäuse (10) eine Druckfläche (18) aufweist, dass die Druckfläche (18) in Achsrichtung der Welle (31) in Richtung zum ersten Wellenende (31.1) hin gegenüber dem zweiten Lagerbuchsen-Ende (53) versetzt angeordnet ist, und dass sich das Federelement (40) mit einem zweiten Federende (40.2), welches dem ersten Federende (40.1) abgewandt ist, auf der Druckfläche (18) des Turbinengehäuses (10) abstützt, um eine Federvorspannung zwischen der Druckfläche (18) und der Stützfläche (24.2) zu erzeugen.

## Beschreibung

Die Erfindung betrifft eine Wastegate-Anordnung für einen Abgasturbolader mit einem Turbinengehäuse, das eine Lageraufnahme aufweist, wobei die Lageraufnahme eine Lagerbuchse aufnimmt, die eine Bohrung aufweist oder wobei die Lageraufnahme die Bohrung bildet,, wobei die Bohrung eine Welle aufnimmt, die ein erstes Wellenende aufweist, welches im Turbinengehäuse angeordnet ist, und die ein zweites Wellenende aufweist, das außerhalb des Turbinengehäuses gehalten ist, wobei die Welle an ihrem ersten Wellenende an eine Wastegateklappe angekoppelt ist, die im Turbinengehäuse angeordnet ist, um in einer Schließposition eine Wastegate-Passage zu verschließen und in einer Öffnungsposition eine Wastegate-Passage freizugeben, wobei die Welle an ihrem zweiten Wellenende einen Betätigungshebel außerhalb des Turbinengehäuses trägt, wobei die Lagerbuchse ein zweites Lagerbuchsen-Ende aufweist, welches im Bereich der Außenseite des Turbinengehäuses dem Betätigungshebel gegenübersteht, oder wobei das Turbinengehäuse außenseitig dem Betätigungshebel mit einer Gehäusefläche gegenübersteht, wobei ein Federelement verwendet ist, das sich mittelbar oder unmittelbar mit einem zweiten Federende auf einer Stützfläche des Betätigungshebels abstützt, und wobei die Stützfläche zumindest bereichsweise um die Welle herum angeordnet ist.

US 2018/0094573 A1 offenbart einen Abgasturbolader mit einem Turbinengehäuse, wobei im Turbinengehäuse eine Wastegate-Passage ausgebildet ist. Diese Wastegate-Passage kann mit einem Wastegate-Ventil wahlweise geöffnet oder verschlossen werden. Zu diesem Zweck weist das Wastegate-Ventil eine Wastegateklappe auf, die einen Dichtsitz der Wastegate-Passage im Schließzustand des Wastegate-Ventils verschließt. Die Wastegate-Klappe ist an einen Arm des Wastegate-Ventils angekoppelt. Der Arm ist einteilig mit einer Welle des Wastegate-Ventils verbunden. Zur Lagerung der Welle im Turbinengehäuse ist eine Lagerbuchse verwendet. Diese besitzt eine Bohrung, durch die die Welle hindurchgeführt ist. Auf der Außenseite des Turbinengehäuses ist an die Welle ein Betätigungshebel drehfest angekoppelt. Mittels eines Aktuators kann der Betätigungshebel zwischen der Öffnungsposition und der Schließposition des Wastegate-Ventils verstellt werden. Im Bereich zwischen dem Arm und der Welle ist am Wastegate-Ventil eine Schulter ausgebildet, die an einem ersten Ende der Lagerbuchse anschlägt. Hierdurch wird die axiale Verstellung in Richtung der Längsachse der Welle in eine Richtung blockiert. An dem Ende der Welle, welches das Betätigungselement trägt, ist zwischen dem Betätigungshebel und dem zugekehrten Ende der Lagerbuchse ein Federelement eingesetzt. Dieses Federelement bringt eine Vorspannung in die Welle ein, um eine axiale Verschiebung der Welle in der Lagerbuchse zu verhindern. Während des Betriebseinsatzes kommt es, bedingt durch Temperaturänderungen oder Schwingungen, zu einer Veränderung des axialen Spiels der Welle. Diese Veränderung des axialen Spiels wird mit dem Federelement ausgeglichen. Aufgrund von baulichen Gegebenheiten ist es gewünscht, dass der Spalt-Abstand zwischen dem Betätigungshebel und dem zugewandten Ende der Lagerbuchse so klein wie möglich gehalten wird. Produktionsbedingte Höhenänderungen, wie sie sich zum Beispiel aus dem Einbau der Lagerbuchse in das Turbinengehäuse oder aus der Verbindung zwischen der Welle und dem Betätigungshebel ergeben, haben im Verhältnis zur Breite des Spalts, in dem das Federelement angeordnet ist, einen hohen Anteil. Beim Verbau der in der US 2018/0094573 A1 vorgeschlagenen Federelemente, kann sich bei voller Ausnutzung der möglichen Toleranzbreite die Vorspannkraft aufgrund der Federrate des Federelements sehr stark ändern. Im Extremfall kann es auch zu einem ungewollten Blockkontakt kommen, der das Federelement nachhaltig schädigt. Weiterhin kommt es durch die kleinen Anlageflächen der Lagerbuchse und des Betätigungshebels, an denen das Federelement anliegt, zu hohen Kontaktkräften. Diese fördern einen Verschleiß des Federelements oder der angrenzenden Bauteile, die im Extremfall zum Bauteilversagen führen können. Schließlich ist es auch so, dass durch eine Verkippung der Welle gegenüber der Lagerbuchse, eine ungleichmäßige Beanspruchung des Federelements mit hoher Federrate entstehen kann.

Es ist Aufgabe der Erfindung, eine Wastegate-Anordnung der eingangs erwähnten Art bereitzustellen, bei der die Schwingungsanregung des Wastegate-Ventils zu der Lagerbuchse zugunsten einer verbesserten Betriebssicherheit optimiert ist.

Diese Aufgabe wird dadurch gelöst, dass das Turbinengehäuse eine Druckfläche aufweist, dass die Druckfläche in Achsrichtung der Welle in Richtung zum ersten Wellenende hin gegenüber dem zweiten Lagerbuchsen-Ende oder der Gehäusefläche versetzt angeordnet ist, und dass sich das Federelement mit einem ersten Federende, welches dem zweiten Federende abgewandt ist, auf der Druckfläche des Turbinengehäuses abstützt, um eine Federvorspannung zwischen der Druckfläche und der Stützfläche des Betätigungshebels zu erzeugen.

Bei der erfindungsgemäßen Ausgestaltung einer Wastegate-Anordnung wird entgegen der durch den Stand der Technik vorgegebenen Lehre das Federelement nicht in den Spaltbereich zwischen dem zweiten Lagerbuchsen-Ende und dem Betätigungshebel, sondern in den vergrößerten Achsspalt zwischen einer äußeren Druckfläche am Turbinengehäuse und der Stützfläche des Betätigungshebel genutzt. Das durch bauliche Gegebenheiten gewünschte geringe axiale Spiel zwischen dem zweiten Lagerbuchsen-Ende und dem Betätigungshebel kann dabei insbesondere unverändert beibehalten oder weiter reduziert werden. Entsprechend hat die Gestaltung der Lagerbuchse keinen Einfluss mehr auf die Vorspannung des als Schwingungsdämpfer verwendeten Federelements. Durch die zusätzlich gewonnene Bauhöhe besteht insbesondere die Möglichkeit die Federrate des Federelements hin zu kleineren Werten zu optimieren, da ein größerer nutzbarer Federweg realisiert werden kann. Insbesondere kann es dabei vorgesehen sein, dass das Federelement eine deutlich flachere Federkennlinie aufweist, als beim Stand der Technik. Damit haben fertigungsbedingte Schwankungen und/oder ein Verschleiß im Betrieb einen vernachlässigbar kleinen Einfluss auf die Vorspannung, sodass sich durch diese Effekte die Vorspannkraft nur geringfügig ändert. Weiterhin vereinfacht sich die Montage erheblich. Insgesamt können auch die Kräfte, welche vom Federelement auf die Stützfläche bzw. die Druckfläche übertragen werden, dadurch kleiner gewählt werden, wobei eine zuverlässige Vorspannung erhalten bleibt. Durch die geringeren Vorspannkräfte reduzieren sich auch die Belastungen auf die angrenzenden Bauteile. Hierdurch wird auch die Betriebssicherheit verbessert. Weiterhin ist es so, dass durch die erfindungsgemäße Konstruktion eine größere Stützfläche bzw. eine größere Druckfläche gewählt werden kann, was die Bauteilbelastungen weiter reduziert.

Gemäß einer denkbaren Erfindungsvariante kann es vorgesehen sein, dass sich das Federelement mit seiner Innenkontur oder mit einem Teil seiner Innenkontur an der Welle ausrichtet und insbesondere an dieser zentriert ist. Diese Ausgestaltungsvariante ist insbesondere dann von Vorteil, wenn das Turbinengehäuse die Bohrung aufweist, in der die Welle unmittelbar geführt ist. Gemäß einer bevorzugten Ausgestaltungsvariante der Erfindung kann es vorgesehen sein, dass die Stützfläche ringförmig um das zweite Lagerbuchsen-Ende umläuft. Auf diese Weise wird eine großflächige Abstützung zum Turbinengehäuse möglich.

Wenn vorgesehen ist, dass die Stützfläche bis an den Außenumfang der Lagerbuchse im Bereich des zweiten Lagerbuchsen-Endes geführt ist, derart dass zwischen der Stützfläche und dem Außenumfang der Lagerbuchse ein Absatz gebildet ist, dann kann die Lagerbuchse zur Zentrierung des Federelements verwendet werden. Denkbar ist es jedoch auch, dass zu diesem Zweck die Stützfläche Teil eines in das Turbinengehäuse eingearbeiteten Absatzes ist, der als ringförmig um die Welle umlaufende Stufe am Turbinengehäuse ausgebildet ist.

Durch die erfindungsgemäße Gestaltung kann der Spaltbereich zwischen dem Betätigungshebel und dem zweiten Lagerbuchsen-Ende minimiert werden. Hierdurch ergibt sich nicht nur alleine eine Verringerung des Teileaufwands, sondern zusätzlich auch eine Bauraum-Optimierung. Erfindungsgemäß kann es daher insbesondere vorgesehen sein, dass der axiale Abstand in Richtung der Längsachse der Welle zwischen dem zweiten Lagerbuchsen-Ende und dem dem zweiten Lagerbuchsen-Ende gegenüberliegendem Teil des Betätigungshebels maximal 0,5 mm beträgt.

Im Rahmen der Erfindung hat sich gezeigt, dass für übliche Turboladeranwendungen optimaler Weise der axiale Abstand zwischen der Stützfläche und der Druckfläche in Richtung der Längsachse der Welle im Bereich zwischen 2 mm und 4 mm beträgt. Dies ermöglicht den Einsatz von Federelementen, die hinsichtlich ihrer Federkennlinien optimiert sind und eine ausreichende stabile Abstützung der Welle des Wastegate-Ventils ermöglichen.

Hierbei kann es beispielsweise auch vorgesehen sein, dass die Federrate des Federelements im Bereich zwischen 30 N/mm und 100 N/mm beträgt.

Eine besonders bevorzugte Ausgestaltungsvariante ist dergestalt, dass das Federelement im Bereich zwischen der Stützfläche und der Druckfläche die Welle ringförmig umläuft.

Erfindungsgemäß kann es weiterhin vorgesehen sein, dass das Federelement mindestens einen Federring aufweist, der aus einem Federblech gebildet ist und um die Welle herum angeordnet ist, wobei der Federring über seinen Umfang verteilt an seinem dem ersten und/oder zweiten Federende zugewandten Bereich wechselweise Erhebungen und Vertiefungen aufweist, wobei der Federring mit den Erhebungen und/oder Vertiefungen vorzugsweise wellenförmig ausgebildet ist, um die gewünschte Federkennlinien ideal wählen zu können. Der Federring kann dabei so ausgebildet sein, dass er die Welle vollumfänglich umschließt oder nur über einen Teil des Umfangs der Welle verläuft.

Wenn dabei vorgesehen ist, dass der mindestens eine Federring im Bereich zwischen zwei bis fünf Erhebungen oder Vertiefungen an seinem dem ersten und/oder zweiten Federende zugewandten Bereich aufweist, kann die Vorspannung im Montagebereich besonders genau eingestellt werden. Es hat sich darüber hinaus gezeigt, dass durch diese Gestaltung die komplette Bauhöhe der Feder genutzt und die Blockhöhe der Feder minimiert werden kann.

Eine erfindungsgemäße Wastegate-Anordnung kann auch dadurch gekennzeichnet sein, dass das Federelement wenigstens zwei Federringe aufweist, die einteilig miteinander verbunden sind, um ein Federpaket zu bilden. Mit solchen Federelementen kann gegenüber üblichen Schraubenfedern auf gleichem Bauraum eine flachere Federkennlinieverwirklicht werden, zugunsten einer reduzierten Federrate.

Besonders bevorzugt kann es vorgesehen sein, dass das Federblech des Federelements im Bereich des ersten und/oder zweiten Federendes einen zumindest teilweise umlaufenden Stützring bildet, der in einer Ebene angeordnet ist, die vorzugsweise parallel zu der Druckfläche und/oder der Stützfläche verläuft. Der umlaufende Stützring bzw. die umlaufenden Stützring können genutzt werden um eine flächige Kraftübertragung von dem Federelement auf die Druckfläche bzw. die Stützfläche zu ermöglichen. Hierdurch werden die Kontaktbelastungen zu dem angrenzenden Turbinengehäuse bzw. zu dem angrenzenden Betätigungshebel deutlich reduziert, zugunsten eines verringerten Verschleißes. Weiterhin kann es auch vorgesehen sein, dass von dem Stützring der erste Federring abgebogen und vorzugsweise von dem ersten Federring der zweite Federring abgebogen ist, dies verringert den Teileaufwand für das Federelement.

Der erste und/oder der zweite Stützring müssen nicht unmittelbar an dem Turbinengehäuse bzw. der Lagerbuchse und/oder dem Betätigungshebel anliegen. Vielmehr ist es auch denkbar, dass eine mittelbare Anlage verwirklicht ist. Dabei ist es insbesondere denkbar, dass zur thermischen Entkopplung ein Bauteil zwischengefügt ist. Weiterhin ist es denkbar, dass zur Verringerung der Reibung ein Bauteil zwischengefügt ist, das beispielsweise von einem Ringelement gebildet sein kann.

Eine bevorzugte Erfindungsvariante ist dergestalt, dass die Welle an ihrem zweiten Wellenende ein im Durchmesser verkleinertes Wellenstück aufweist, derart dass im Übergang zu dem im Durchmesser vergrößerten, in Richtung auf das erste Wellenende anschließenden Wellenbereich ein Absatz gebildet ist, und dass der Betätigungshebel an diesem Absatz anliegt und mit der Welle stoffschlüssig und/oder formschlüssig verbunden, vorzugsweise verschweißt, ist. Der Betätigungshebel kann lagerichtig am Absatz ausgerichtet und dann mit der Welle verbunden werden. Hierdurch entfällt die Notwendigkeit des Einsatzes einer Lehre, beispielsweise einer Schweißlehre, wenn eine Schweißverbindung gewählt wird.

Denkbar ist es auch, dass die Druckfläche einen radial zur Längsachse der Welle nach außen über das Federelement vorstehenden Ausrichtabschnitt aufweist, der einer Ausrichtfläche des Betätigungshebels gegenübersteht. Bei einem solchen Aufbau kann beispielsweise die Welle ohne den vorher erwähnten, im Durchmesser verkleinerten Wellenabschnitt gefertigt werden. Zwischen der Ausrichtfläche und dem Ausrichtabschnitt kann dann eine Lehre, beispielsweise eine Schweißlehre eingesetzt verwendet werden, um eine passgenaue stoffschlüssige Verbindung zwischen dem Betätigungshebel und der Welle fertigen zu können.

Eine mögliche Erfindungsausgestaltung kann so sein, dass die Wastegate-Klappe einen Befestigungsabschnitt aufweist, der vorzugsweise beweglich, an einen Arm eines Wastegate-Ventils angekoppelt ist. Auf diese Weise kann sich die WastegateKlappe exakt gegenüber dem Dichtsitz der Wastegate-Passage ausrichten. Vorzugsweise kann es auch vorgesehen sein, dass der Arm einteilig an die Welle angekoppelt ist und wobei weiter vorzugsweise im Bereich des zweiten Wellenendes ein Gegenlager vorgesehen ist, dass zur Bildung eines axialen Anschlags dem ersten Lagerbuchsen-Endes gegenübersteht.

Für eine zuverlässige Bedienung des Wastegate-Ventils kann es vorgesehen sein, dass die Welle über ein Hebelgetriebe an ein Stellglied eines Aktuators angeschlossen ist, und wobei das Hebelgetriebe zumindest den Betätigungshebel und einen mit dem Betätigungshebel gelenkig verbundenen Gelenkhebel umfasst.

Gemäß einer Erfindungsvariante kann es vorgesehen sein, dass das Federelement als ringförmiges Bauteil ausgebildet ist, das in Umfangsrichtung einen Schlitz aufweist um das Federelement in radialer Richtung auf die Welle aufschieben zu können. Hierbei kann das Federelement dann, wenn die Welle bereits im Turbinengehäuse montiert ist, seitlich auf die Welle aufgeschoben werden, um die Abstützung zwischen dem Betätigungshebel und dem Turbinengehäuse zu bewirken.

Die Erfindung wird im Folgenden anhand eines in den Zeichnungen dargestellten Ausführungsbeispiels näher erläutert. Es zeigen:
- Figur 1: in perspektivischer Ansicht einen Abgasturbolader,

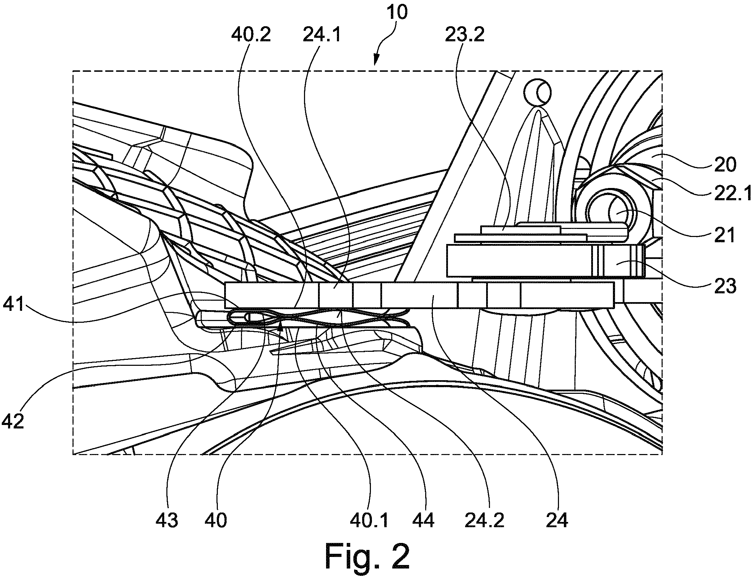

- Figur 2: eine der Figur 1 entnommene Detaildarstellung,
- Figur 3: einen Teilschnitt durch einen Turbinengehäuse des Abgasturboladers gemäß Figur 1,
- Figur 4: ein Federelement in perspektivischer Ansicht und
- Figuren 5 und 6: ein Wastegate-Ventil in perspektivischer Darstellung.

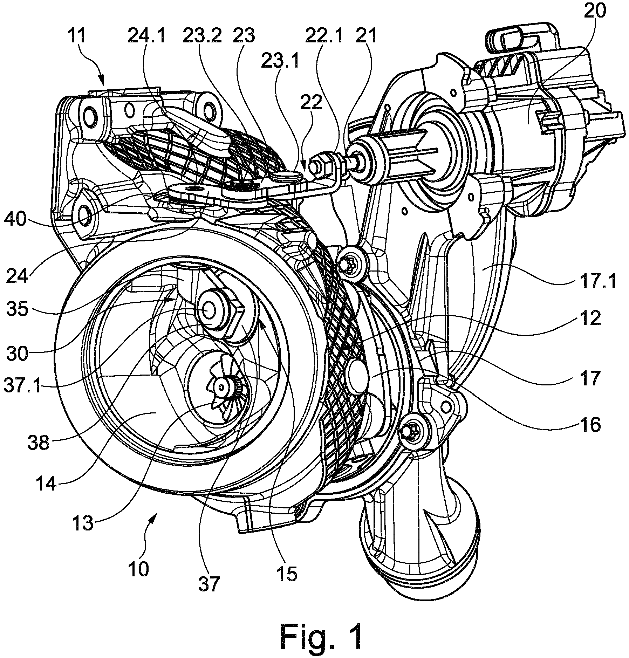

Figur 1 zeigt einen Abgasturbolader mit einem Lagergehäuse 16, an das einseitig ein Turbinengehäuse 10 angebaut ist. Auf der gegenüberliegenden Seite des Lagergehäuses 16 ist ein Verdichtergehäuse 17 mit dem Lagergehäuse 16 verbunden. In dem Lagergehäuse 16 ist eine Antriebswelle gelagert, welche an ihrem einen Ende ein Turbinenrad 13 trägt, das im Turbinengehäuse 10 angeordnet ist. An dem anderen Ende der Antriebswelle ist ein Verdichterrad im Verdichtergehäuse 17 gehalten.

Der Abgasturbolader weist einen Ausleger 17.1 auf, der beispielsweise einteilig mit dem Verdichtergehäuse 17 verbunden sein kann. Der Ausleger 17.1 trägt einen Aktuator 20. Diese Aktuator 20 weist einen Antrieb, beispielsweise einen elektrischen oder pneumatischen Antrieb, auf, mit dem ein Stellglied 21, vorzugsweise linear, verstellbar ist. Denkbar ist es auch, dass das Stellglied 21 auf einer Bogenbahn, insbesondere rotatorisch, mit dem Aktuator 20 verstellt wird.

Das Turbinengehäuse 10 besitzt eine Gas-Eintrittsöffnung 11. Über diese kann der von einem Verbrennungsmotor kommende Abgasstrom oder ein Teil-Abgasstrom in einen Führungskanal 12 des Turbinengehäuse 10 geleitet werden, vorzugsweise ist der Führungskanal 12 als Spiralkanal ausgebildet, der um das Turbinenrad 13 herum positioniert ist. Über den Führungskanal 12 kann der Abgasstrom dem Turbinenrad 13 zugeleitet werden. An dem Turbinenrad 13 entspannt sich der Abgasstrom in eine anschließende Austrittskammer 14, wodurch die Antriebswelle in Drehbewegung versetzt wird.

Im Turbinengehäuse 10 ist weiterhin eine Wastegate-Passage 15 vorgesehen. Diese Wastegate-Passage 15 stellt eine räumliche Verbindung zwischen dem Führungskanal 12 und der Austrittskammer 14 her. Die Wastegate-Passage 15 bildet somit einen Bypass für den Abgasstrom unter Umgehung des Turbinenrads 13.

Die Wastegate-Passage 15 kann in bekannter Weise mit einem Wastegate-Ventil 30 verschlossen werden. Das Wastegate-Ventil 30 lässt sich entsprechend zwischen einer Schließstellung und einer Öffnungsstellung bewegen. In der Schließstellung sitzt das Wastegate-Ventil 30 mit einer Wastegate-Klappe 37 auf einer Dichtfläche der Wastegate-Passage 15 auf und verschließt die Wastegate-Passage 15. In der Öffnungsstellung gibt die Wastegate-Klappe 37 die Dichtfläche frei und öffnet damit die Wastegate-Passage 15.

Die Verstellung des Wastegate-Ventils 30 erfolgt mittels des Aktuators 20, wie dies später näher erläutert wird.

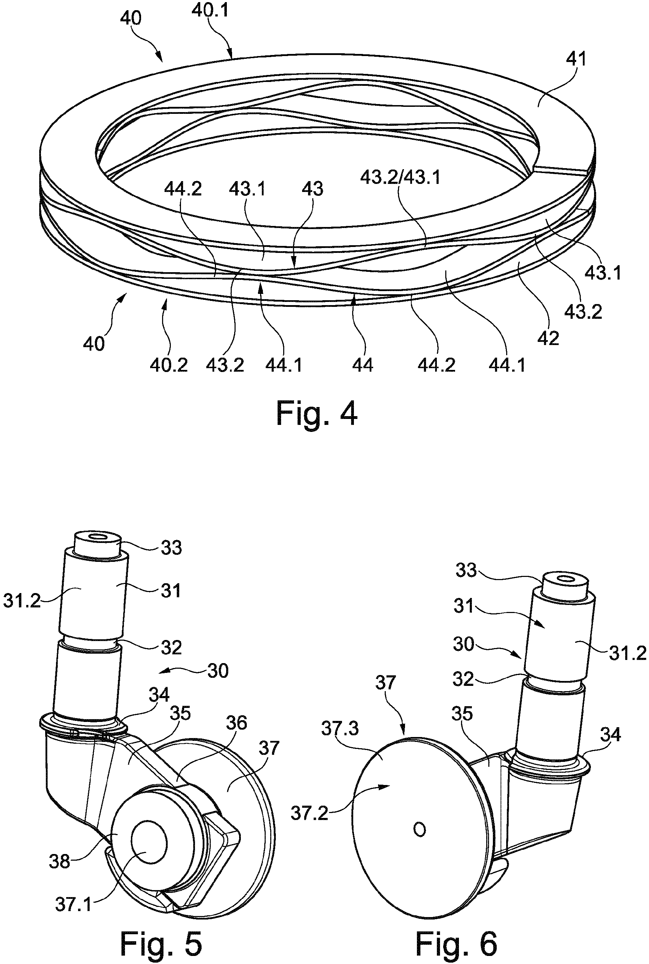

Die Figuren 5 und 6 zeigen exemplarisch eine mögliche Ausgestaltungsvariante eines Wastegate-Ventils 30. Wie diese Darstellungen zeigen, weist das Wastegate-Ventil 30 die Wastegate-Klappe 37 auf. Die Wastegate-Klappe kann dabei insbesondere Teller förmig ausgebildet sein. Sie besitzt eine Innenseite 37.2 und einen im Bereich der Innenseite 37.2 angeordneten Dichtabschnitt 37.3. Im vorliegenden Ausführungsbeispiel ist der Dichtabschnitt 37.3 planparallel zu der Innenseite 37.2. Denkbar ist es jedoch auch, dass der Dichtabschnitt 37.3 von einem umlaufenden Vorsprung, beispielsweise einem Wulst gebildet ist.

Die Wastegate-Klappe 37 besitzt einen Befestigungsabschnitt 37.1. Über diesen Befestigungsabschnitt 37.1 ist die Wastegate-Klappe 37 einteilig mit einem Halteabschnitt 36 verbunden. Dieser Halteabschnitt 36 kann Teil eines Arms 35 des Wastegate-Ventils 30 sein. Im vorliegenden Ausführungsbeispiel ist die WastegateKlappe 37 an ihrem Befestigungsabschnitt 37.1 und unter Verwendung eines Verbindungselements 38 mit dem Arm 35, vorzugsweise beweglich verbunden. Denkbar ist es jedoch auch, dass eine feste Verbindung zum Arm 35 besteht. Weiterhin denkbar ist es, dass die Wastegate-Klappe 37 einteilig mit dem Arm 35 verbunden ist.

Die Zeichnungen zeigen weiterhin, dass das Wastegate-Ventil 30 eine Welle 31 aufweist, die vorzugsweise einteilig über einen Verbindungsabschnitt mit dem Arm 35 verbunden ist. Im Bereich zwischen einem ersten Wellenende 37.1 welches der Wastegate-Klappe 37 zugekehrt ist, kann ein Gegenlager 34 vorgesehen sein. Dieses Gegenlager 34 kann beispielsweise als umlaufende Wellenschulter ausgebildet sein. Denkbar ist es auch, dass das Gegenlager 34 einen oder mehrere radiale Vorsprünge aufweist.

Gegenüberliegend dem ersten Wellenende 31.1 weist die Welle 31 ein zweites Wellenende 31.2 auf. Wie im vorliegenden Ausführungsbeispiel in den Figuren 5 und 6 gezeigt, kann im Bereich des zweiten Wellenendes 31.2 ein im Durchmesser verkleinertes Wellenstück 33 angeordnet sein. Dabei ergibt sich zwischen dem Wellenstück 33 und dem im Durchmesser vergrößerten anschließenden Bereich der Welle 31 ein Absatz.

Denkbar ist es jedoch auch, dass das Wastegate-Ventil 30 unter Verzicht auf das endseitige Wellenstück 33 gefertigt ist und endseitig einen einheitlichen Durchmesser aufweist.

Denkbar ist es auch, dass im Bereich zwischen dem ersten Wellenende 31.1 und dem zweiten Wellenende 31.2 eine umlaufende Nut 32 in die Welle 31 eingearbeitet ist.

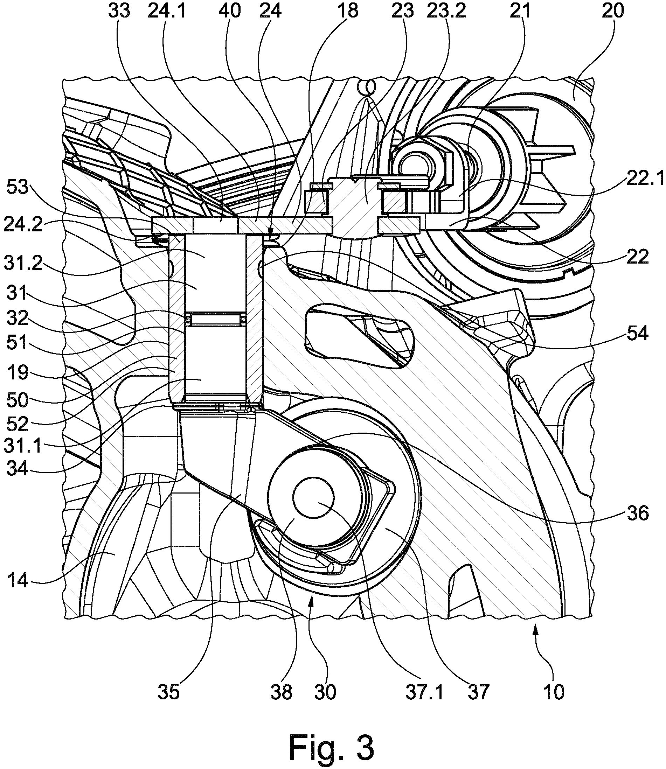

Wie Figur 3 zeigt, weist das Turbinengehäuse 10 eine Buchsenaufnahme 19 auf. In diese Buchsenaufnahme 19 kann eine Lagerbuchse 50 eingesetzt, vorzugsweise eingepresst werden. Für eine zusätzliche Fixierung der Lagerbuchse 50 im Turbinengehäuse 10 kann optional eine Formschlussverbindung zwischen dem Turbinengehäuse 10 und der Lagerbuchse 50 vorgesehen sein. Beispielsweise ist es denkbar, dass die Lagerbuchse 50 eine Buchsennut 54 aufweist, die zu einer Nut in der Buchsenaufnahme 19 des Turbinengehäuses 10 ausgerichtet ist. In den Bereich zwischen der Buchsennut 54 und der Nut kann ein Formschlusselement, beispielsweise einen Stift eingesetzt werden, der dann die axiale Verschiebung der Lagerbuchse 50 im Turbinengehäuse 10 blockiert.

Die Lagerbuchse 50 besitzt ein erstes Lagerbuchsen-Ende, welches im Turbinengehäuse 10, nämlich im Bereich der Austrittskammer 14 gehalten ist. Dabei steht das erste Lagerbuchsen-Ende vorzugsweise über die angrenzende Körperkontur des Turbinengehäuses 10 vor, um insbesondere eine Anlage für das Gegenlager 34 des Wastegate-Ventils 30 zu bilden.

Die Lagerbuchse 50 besitzt gegenüberliegend dem ersten Lagerbuchsen-Ende 52 ein zweites Lagerbuchsen-Ende 53, welches außerhalb des Turbinengehäuses 10 angeordnet ist. Die Anordnung außerhalb des Turbinengehäuses 10 beinhaltet gemäß der Erfindung eine Anordnung, bei der das zweite Lagerbuchsen-Ende 53 auch plan mit einer Oberflächenkontur des Turbinengehäuses 10 abschließt oder wobei das zweite Lagerbuchsen-Ende 53 sich in der Buchsenaufnahmen 19 befindet.

Wie Figur 3 weiter zeigt, besitzt die Lagerbuchse 50 eine Bohrung 51. Die Bohrung 51 bildet eine Lageraufnahme für die Welle 31 des Wastegate-Ventils 30. Die Welle 31 kann mit ihrem zweiten Wellenende 31.2 ausgehend von der Austrittskammer 14 in die Bohrung 51 eingeschoben werden.

In die Nut 32 der Welle 31 kann nach einer Ausgestaltungsvariante ein O-Ring oder eine sonstige wärmebeständige Dichtung, beispielsweise ein wärmebeständiger Dichtring eingesetzt sein. Hierdurch wird die Welle 31 gegenüber der Bohrung 51 abgedichtet. Denkbar ist es jedoch auch, dass die Passung zwischen der Welle 31 und der Bohrung 51 so gewählt wird, dass aufgrund der Passungsgeometrie bereits eine ausreichende Dichtigkeit gewährleistet ist.

Die Einsetzbewegung des Wastegate-Ventils 30 in die Lagerbuchse 50 kann beispielsweise mit dem Gegenlager 34 begrenzt werden. Dieses schlägt an dem ersten Lagerbuchsen-Ende 52 an.

Im eingesetzten Zustand steht die Welle 31 mit ihrem zweiten Wellenende 31.2 über das zweite Lagerboxen-Ende 53 vor. Bei der in der Zeichnung dargestellten Ausführungsvariante steht die Welle 31 mit ihrem Wellenstück 33 über die Lagerbuchse 50 vor. Wird eine Welle 31 verwendet, bei der kein Wellenstück 33, mit im Durchmesser verringerten Querschnitt verwendet ist, so steht die Welle 31 mit einem entsprechenden Endabschnitt über die Lagerbuchse 50 vor.

Auf das zweite Wellenende 31.2 kann ein Betätigungshebel 24 aufgesetzt werden. Zu diesem Zweck weist der Betätigungshebel 24 eine entsprechende Aufnahme auf, die auf das Wellenstück 33 (bzw. den Endabschnitt der Welle 31) aufgesetzt werden kann. Die Aufsetzbewegung des Betätigungshebels 24 wird mit dem Absatz der Welle 31, welcher sich an das Wellenstück 33 anschließt, begrenzt, wie Figur 3 zeigt.

Der Betätigungshebel 24 kann mit der Welle 31 in beliebiger Weise verbunden werden. Beispielsweise ist es denkbar, dass eine stoffschlüssige Verbindung, beispielsweise eine Schweißverbindung zwischen dem Betätigungshebel 24 und der Welle 31, insbesondere dem Wellenstück 33 hergestellt wird.

Figur 3 zeigt weiter, dass zwischen dem zweiten Lagerbuchsen-Ende 53 und der zugewandten Seite des Betätigungshebels 24 ein axiales Spiel vorhanden ist.

Weiterhin zeigt Figur 3, dass zwischen dem Betätigungshebel 24 und dem Turbinengehäuse 10 ein Federelement 40 verbaut ist. Beispielsweise kann ein Federelement 40 verwendet sein, wie es in Figur 4 gezeigt ist.

Figur 4 veranschaulicht, dass das Federelement 40 zwei ringförmige Stützringe 41, 42 aufweist. Die Stützringe 41, 42 sind jeweils in einer Ebene angeordnet, wobei die Ebenen zueinander vorzugsweise zueinander parallel sind. Der erste Stützring 41 ist einem ersten Federende 40.1 und der zweite Stützring einem zweiten Federende 40.2 zugewandt.

Zwischen den Stützringen 41, 42 ist ein oder sind mehrere Federringe 43, 44 angeordnet. Im vorliegenden Ausführungsbeispiel sind zwei Federringe 43, 44 verwendet. Die Federringe 43 sind wellenförmig ausgebildet. Entsprechend weist der Federring 43 dem ersten Federende 40.1 zugewandt wechselweise Vertiefungen 43.1 und Erhebungen 43.2 auf. Auf der gegenüberliegenden, dem zweiten Federende 40.2 zugewandten Seite bildet der Federring 43 entsprechend Erhebungen 43.2 und Vertiefungen 43.1. Der zweite Federring 44 ist im Wesentlichen baugleich zu dem ersten Federring gestaltet und weist Erhebungen 44.2 und Vertiefungen 44.1 auf.

Auf der dem Stützring 41 zugewandten Seite stützt sich der Federring 43 mit seinen Erhebungen 43.2 gegenüber dem Stützring 41 ab.

Der Federring 44 stützt sich mit seinen Erhebungen 44.2 auf seiner dem zweiten Federende 40.2 zugewandten Seite auf dem Stützring 42 ab.

Auf den einander zugewandten Seiten stützen sich die Federringe 43, 44 im Bereich ihrer zugewandten Erhebungen 43.2, 44.2 gegeneinander ab.

Vorzugsweise ist das Federelement 40 aus einem flächigen Stahl-Blechzuschnitt gefertigt, Weiter vorzugsweise sind sowohl die Stützringe 41, 42 als auch die Federringe 43, 44 einteilig miteinander verbunden sind.

Besonders bevorzugt kann es vorgesehen sein, dass das Federelement 40 aus einem hochtemperaturfesten Stahlwerkstoff, insbesondere einem streifenförmigen Stahl-Blechzuschnitt, gefertigt ist. Beispielsweise ist es dabei denkbar, dass als Werkstoff Inconel zum Einsatz kommt.

Wie Figur 4 zeigt, kann zu diesem Zweck der Stützring 41 ein Ende des Blechzuschnitts bilden. Ausgehend von diesem Ende erstreckt sich der Stützring 41 und von dem Stützring 41 werden dann die Federringe 43 und 44 und anschließend der Stützring 42 abgebogen. Der zweite Stützring 42 bildet dann das zweite freie Ende des flächigen Blechzuschnitts.

Denkbar ist auch die Verwendung eines Federelements 40, welches im Wesentlichen baugleich mit dem Federelement 40 gemäß Figur 4 gestaltet ist, welches jedoch unter Verzicht auf wenigstens einen der Stützringe 41, 42 gefertigt ist.

Figur 3 veranschaulicht, dass das Federelement 40 mit seinem ersten Federende 40.1 gegenüber einer Stützfläche 24.2 des Betätigungshebels 24 abgestützt ist. Vorzugsweise liegt das Federelement 40 hier mit dem Stützring 41 flächig an.

Vorzugsweise kann es vorgesehen sein, dass das Federelement 40 gegenüberliegend der Stützfläche 24.2 an einer Druckfläche 18 des Turbinengehäuses 10 abgestützt ist. Zu diesem Zweck kann das Federelement 40 beispielsweise mit seinem zweiten Stützring 42 auf der Druckfläche 18 aufsitzen.

Die Druckfläche 18 wird vorzugsweise von einer Ringfläche gebildet, die um die Lagerbuchse 50 herum verläuft und mittelbar oder unmittelbar an diese anschließt.

Ein unmittelbares Anschließen beinhaltet insbesondere auch einen Übergang, bei dem die Druckfläche 18 über eine Einführfase der Buchsenaufnahme 19 an die Lagerbuchse 50 anschließt.

Im montierten Zustand ist das Federelement 40 in einem Vorspannzustand gehalten, wobei das Federelement 40 eine Vorspannkraft auf die Druckfläche 18 und die Stützfläche 24.2 überträgt. Auf diese Weise ist die Welle 31 spielfrei gegenüber dem Turbinengehäuse 10 gehalten. Gleichwohl können temperaturbedingte Längenänderungen oder Schwingungen über das Federelement 40 ausgeglichen werden.

Figur 1 veranschaulicht, dass das Stellglied 21 des Aktuators 20 über ein Getriebe mit der Welle 31 verbunden sein kann. Teil dieses Getriebes ist der Betätigungshebel 24, der drehfest mit der Welle 31 verbunden ist. An seinem der Welle 31 abgewandten Ende ist der Betätigungshebel 24 mittels eines Gelenks 23.2 an einen Gelenkhebel 23 schwenkbar angeschlossen. Der Gelenkhebel 23 weist ein weiteres Gelenk 23.1 auf, mit dem er an ein Verbindungsstück 22 gelenkig angeschlossen ist. Das Verbindungsstück 22 stellt die Verbindung zwischen dem Gelenkhebel 23 und dem Stellglied 21 her. Zu diesem Zweck besitzt das Verbindungsstück 22 ein Befestigungselement 22.1, welches vorzugsweise lösbar mit dem Stellglied 21 verbunden ist.

Zur Verstellung des Wastegate-Ventils 30 zwischen einer Öffnungsstellung und einer Schließstellung wird mit dem Aktuator 20 das Stellglied 21 linear verstellt. Diese Stellbewegung wird über das Getriebe in den Betätigungshebel 24 übertragen. Hierdurch wird der Betätigungshebel 24 geschwenkt. Da die Welle 31 drehfest mit dem Betätigungshebel 24 verbunden ist, wird somit auch das Wastegate-Ventil 30 in der Lagerbuchse 50 geschwenkt.

Wie die vorstehenden Erläuterungen veranschaulichen, besitzt der Abgasturbolader gemäß der Erfindung eine Wastegate-Anordnung mit einem Turbinengehäuse 10, das eine Lageraufnahme 19 aufweist. Die Lageraufnahme 19 nimmt eine Lagerbuchse 50 auf die in einer Bohrung 51 eine Welle 31 lagert. An die Welle 31 ist am ersten Wellenende 31.1 die Wastegateklappe 37 des Wastegate-Ventils 30 angekoppelt ist. An ihrem zweiten Wellenende 31.2 trägt die Welle 31 einen Betätigungshebel 24 außerhalb des Turbinengehäuses. Die Lagerbuchse 50 besitzt ein zweites Lagerbuchsen-Ende 53, welches im Bereich der Außenseite des Turbinengehäuses 10 dem Betätigungshebel 24 gegenübersteht. Erfindungsgemäß ist ein Federelement 40 verwendet, das sich mittelbar oder unmittelbar mit einem zweiten Federende 40.2 auf einer Stützfläche 24.2 des Betätigungshebels 24 abstützt. Weiterhin weist das Turbinengehäuse 10 eine Druckfläche 18 auf, die in Achsrichtung der Welle 31 in Richtung zum ersten Wellenende 31.1 hin gegenüber dem zweiten Lagerbuchsen-Ende 53 versetzt angeordnet ist. Das Federelement 40 stützt sich mit einem zweiten Federende 40.2, auf der Druckfläche 18 des Turbinengehäuses 10 ab, um eine Federvorspannung zwischen der Druckfläche 18 und der Stützfläche 24.2 zu erzeugen.

In dem vorbeschriebenen und in den Zeichnungen gezeigten Ausführungsbeispiel der Erfindung ist die Welle 31 des Wastgate-Ventils 30 mittelbar, beispielsweise mit der Lagerbuchse 50 im Turbinengehäuse 10 gelagert. Denkbar ist es jedoch auch, dass die Welle 31 unmittelbar in einer Bohrung des Turbinengehäuses 10 gelagert ist.

## Patentansprüche

1. Wastegate-Anordnung für einen Abgasturbolader mit einem Turbinengehäuse (10), das eine Lageraufnahme (19) aufweist, wobei die Lageraufnahme (19) eine Lagerbuchse (50) aufnimmt, die eine Bohrung (51) aufweist oder wobei die Lageraufnahme die Bohrung (51) bildet, wobei die Bohrung (51) eine Welle (31) aufnimmt, die ein erstes Wellenende (31.1) aufweist, welches im Turbinengehäuse (10) angeordnet ist, und die ein zweites Wellenende (31.2) aufweist, das außerhalb des Turbinengehäuses (10) gehalten ist, wobei die Welle (31) an ihrem ersten Wellenende (31.1) an eine Wastegateklappe (37) angekoppelt ist, die im Turbinengehäuse (10) angeordnet ist, um in einer Schließposition eine Wastegate-Passage (15) zu verschließen und in einer Öffnungsposition eine Wastegate-Passage (15) freizugeben, wobei die Welle (31) an ihrem zweiten Wellenende (31.2) einen Betätigungshebel (24) außerhalb des Turbinengehäuses (10) trägt, wobei die Lagerbuchse (50) ein zweites Lagerbuchsen-Ende (53) aufweist, welches im Bereich der Außenseite des Turbinengehäuses (10) dem Betätigungshebel (24) gegenübersteht, oder wobei das Turbinengehäuse außenseitig dem Betätigungshebel (24) mit einer Gehäusefläche gegenübersteht, wobei ein Federelement (40) verwendet ist, das sich mittelbar oder unmittelbar mit einem zweiten Federende (40.2) auf einer Stützfläche (24.2) des Betätigungshebels (24) abstützt, und wobei die Stützfläche (24.2) zumindest bereichsweise um die Welle (31) herum angeordnet ist,
**dadurch gekennzeichnet,**
**dass** das Turbinengehäuse (10) eine Druckfläche (18) aufweist, dass die Druckfläche (18) in Achsrichtung der Welle (31) in Richtung zum ersten Wellenende (31.1) hin gegenüber dem zweiten Lagerbuchsen-Ende (53) oder der Gehäusefläche versetzt angeordnet ist, und dass sich das Federelement (40) mit einem ersten Federende (40.1), welches dem zweiten Federende (40.2) abgewandt ist, auf der Druckfläche (18) des Turbinengehäuses (10) abstützt, um eine Federvorspannung zwischen der Druckfläche (18) und der Stützfläche (24.2) zu erzeugen.

2. Wastegate-Anordnung nach Anspruch 1, **dadurch gekennzeichnet, dass** die Stützfläche (24.2) ringförmig um das zweite Lagerbuchsen-Ende (53) umläuft.

3. Wastegate-Anordnung nach Anspruch 1 oder 2, **dadurch gekennzeichnet, dass** die Stützfläche (24.2) bis an den Außenumfang der Lagerbuchse (50) im Bereich des zweiten Lagerbuchsen-Endes (53) geführt ist, derart dass zwischen der Stützfläche (24.2) und dem Außenumfang der Lagerbuchse(50) ein Absatz gebildet ist,
oder dass das die Stützfläche (24.2) Teil eines in das Turbinengehäuse (10) eingearbeiteten Absatzes ist, der als ringförmig um die Welle (31) umlaufende Stufe am Turbinengehäuse (10) ausgebildet ist.

4. Wastegate-Anordnung nach einem der Ansprüche 1 bis 3, **dadurch gekennzeichnet, dass** der axiale Abstand in Richtung der Längsachse der Welle (31) zwischen dem zweiten Lagerbuchsen-Ende (53) und dem dem zweiten Lagerbuchsen-Ende (53) gegenüberliegendem Teil des Betätigungshebels (24) maximal 0,5 mm beträgt,
und/oder dass der axiale Abstand zwischen der Stützfläche (24.2) und der Druckfläche (18) in Richtung der Längsachse der Welle (31) im Bereich zwischen 2 mm und 4 mm beträgt.

5. Wastegate-Anordnung nach einem der Ansprüche 1 bis 4, **dadurch gekennzeichnet, dass** die Federrate des Federelements (40) im Bereich zwischen 30 N/mm und 100 N/mm beträgt.

6. Wastegate-Anordnung nach einem der Ansprüche 1 bis 5, **dadurch gekennzeichnet, dass** das Federelement (40) im Bereich zwischen der Stützfläche (24.2) und der Druckfläche (18) die Welle (31) ringförmig umläuft.

7. Wastegate-Anordnung nach einem der Ansprüche 1 bis 6, **dadurch gekennzeichnet, dass** das Federelement (40) mindestens einen Federring (43, 44) aufweist, der aus einem Federblech gebildet ist und um die Welle (31) herum angeordnet ist, wobei der Federring (43, 44) über seinen Umfang verteilt an seinem dem ersten und/oder zweiten Federende (40.1, 40.2) zugewandten Bereich wechselweise Erhebungen (43.2, 44.2) und Vertiefungen (43.1, 44.1) aufweist, wobei der Federring (43, 44) mit den Erhebungen (43.2, 44.2) und/oder Vertiefungen (43.1, 44.1) vorzugsweise wellenförmig ausgebildet ist.

8. Wastegate-Anordnung nach Anspruch 7, **dadurch gekennzeichnet, dass** der mindestens eine Federring (43, 44) im Bereich zwischen zwei bis fünf Erhebungen oder Vertiefungen an seinem dem ersten und/oder zweiten Federende (40.1, 40.2) zugewandten Bereich aufweist.

9. Wastegate-Anordnung nach Anspruch 7 oder 8, **dadurch gekennzeichnet, dass** das Federelement (40) wenigstens zwei Federringe (43, 44) aufweist, die einteilig miteinander verbunden sind, um ein Federpaket zu bilden oder dass das Federelement (40) mehrteilig ausgebildet ist.

10. Wastegate-Anordnung nach einem der Ansprüche 7 bis 9, **dadurch gekennzeichnet, dass** das Federblech des Federelements (40) im Bereich des ersten und/oder zweiten Federendes (40.1, 40.2) einen zumindest teilweise umlaufenden Stützring (41, 42) bildet, der in einer Ebene angeordnet ist, die vorzugsweise parallel zu der Druckfläche (18) und/oder der Stützfläche (24.2) verläuft, und dass von dem Stützring (41, 42) der erste Federring (43) abgebogen und vorzugsweise von dem ersten Federring (43) der zweite Federring (44) abgebogen ist.

11. Wastegate-Anordnung nach einem der Ansprüche 1 bis 10, **dadurch gekennzeichnet, dass** die Welle (31) an ihrem zweiten Wellenende (31.2) ein im Durchmesser verkleinertes Wellenstück (33) aufweist, derart, dass im Übergang zu dem im Durchmesser vergrößerten, in Richtung auf das erste Wellenende anschließenden Wellenbereich ein Absatz gebildet ist, und dass der Betätigungshebel (24) an diesem Absatz anliegt und mit der Welle (31) stoffschlüssig und/oder formschlüssig verbunden, vorzugsweise verschweißt, ist.

12. Wastegate-Anordnung nach einem der Ansprüche 1 bis 11, **dadurch gekennzeichnet, dass** die Druckfläche (18) einen radial zur Längsachse der Welle (31) nach außen über das Federelement (40) vorstehenden Ausrichtabschnitt aufweist, der einer Ausrichtfläche des Betätigungshebels (24) gegenübersteht.

13. Wastegate-Anordnung nach einem der Ansprüche 1 bis 12, **dadurch gekennzeichnet, dass** die Wastegate-Klappe (37) einen Befestigungsabschnitt (37.1) aufweist, der vorzugsweise beweglich, an einen Arm (35) eines Wastegate-Ventils (30) angekoppelt ist, wobei vorzugsweise vorgesehen ist, dass der Arm (35) einteilig an die Welle (31) angekoppelt ist und wobei weiter vorzugsweise im Bereich des zweiten Wellenendes (31.2) ein Gegenlager (34) vorgesehen ist, dass zur Bildung eines axialen Anschlags dem ersten Lagerbuchsen-Endes (50.2) gegenübersteht.

14. Wastegate-Anordnung nach einem der Ansprüche 1 bis 13, **dadurch gekennzeichnet, dass** die Welle (31) über ein Hebelgetriebe an ein Stellglied (21) eines Aktuators (20) angeschlossen ist, und wobei das Hebelgetriebe zumindest den Betätigungshebel (24) und einen mit dem Betätigungshebel (24) gelenkig verbundenen Gelenkhebel (23) umfasst.

15. Wastegate-Anordnung nach einem der Ansprüche 1 bis 14, **dadurch gekennzeichnet, dass** das das Turbinengehäuse (10) eine Gas-Eintrittsöffnung (11) aufweist, die in einen Führungskanal (12) mündet, dass der Führungskanal (12) einem Turbinenrad (13) zugeleitet ist, dass in Strömungsrichtung nach dem Turbinenrad (13) eine Austrittskammer (14) angeordnet ist, und dass im Bereich zwischen dem Führungskanal (12) und der Austrittskammer (14) die Wastegate-Passage verläuft, um einen Bypasskanal zwischen dem Führungskanal (12) und der Austrittskammer (14) zu bilden.

16. Wastegate-Anordnung nach einem der Ansprüche 1 bis 15, **dadurch gekennzeichnet, dass** das Federelement (40) als ringförmiges Bauteil ausgebildet ist, das in Umfangsrichtung einen Schlitz aufweist um das Federelement (40) in radialer Richtung auf die Welle (31) aufzuschieben.
